Europäisches Patentamt

European Patent Office

Office européen des brevets

(19)

(11) Numéro de publication : **0 580 487 A1**

## (12) DEMANDE DE BREVET EUROPEEN

(21) Numéro de dépôt : 93401853.2

(22) Date de dépôt : 19.07.93

(51) Int. Cl.⁵ : **C07F 7/08, C07F 7/00, C04B 41/84, C04B 41/49, C07F 9/00**

(30) Priorité : 20.07.92 FR 9208926

(43) Date de publication de la demande :
**26.01.94 Bulletin 94/04**

(84) Etats contractants désignés :
**BE CH DE DK ES FR GB IT LI NL**

(71) Demandeur : **SOCIETE DES CERAMIQUES TECHNIQUES**
**F-65460 Bazet (FR)**

(72) Inventeur : **Soria, Raymond**
**23 bis, route d'Ourbellile**
**F-65460 Bazet (FR)**
Inventeur : **Cominotti, Sophie**
**26, rue Georges Lassalle**
**F-65000 Tarbes (FR)**
Inventeur : **Gillot, Jacques**
**5, Impasse de la Hount, Odos**
**F-65310 Laloubere (FR)**

(74) Mandataire : **Laroche, Danièle et al**
**c/o SOSPI 14-16 rue de la Baume**
**F-75008 Paris (FR)**

(54) **Polycondensat organo-minéral et procédé d'obtention.**

(57) Polycondensat organo-minéral, caractérisé par le fait qu'il répond à la formule

$$C_vH_wO_xSi_yMe_z$$

avec :
    v = 4 à 48
    w = 5 à 52
    x = 5 à 48
    y = 2 à 16
    z = 1

le rapport $\dfrac{v}{y + z}$ étant inférieur à 7,

$C_vH_w$ étant une chaîne carbonée portée par le silicium, Me étant un métal ou un mélange de métaux choisis dans les groupes IVA, VA, VIA, IIIB, IVB, de la classification périodique.

EP 0 580 487 A1

La présente invention concerne un polycondensat organo-minéral solide appartenant à la famille des produits connus sous la dénomination ORMOSIL (organically modified silicate) ou ORMOCER (organically modified ceramic).

Ces produits sont des structures amorphes de chaînes organo-minérales reliées entre elles par des fonctions organiques polymérisées ou par des atomes métalliques au travers de ponts oxygène.

HOU et SCHOLZE (J. non Crystalline Solids, 100, 1988, 418-423) ont décrit la synthèse d'un hétéropolycondensat silicium titane. Ce composé ne comporte aucune fonction organique, et son taux en atomes métalliques est relativement faible.

D'autre part, SCHMIDT et SEIFERLING (Mat. Res. Soc. Symp. Proc. 73, 1986, 739-750) ou KOHJIYA, OCHIAI et YAMASHITA) J. non Crystalline Solids, 119, 1990, 132-135) ont déjà présenté des condensats organo-minéraux. Mais ces produits ne comportent pas ou peu d'éléments métalliques. La faible teneur en atomes métalliques dans ce type de produits est due à la grande vitesse d'hydrolyse des dérivés métalliques.

Dans leur communication au Workshop Glass de SEVILLE en 1990, DIRE, BABONEAU, CARTURAN et LIVAGE ont démontré la précipitation et la ségrégation du titane. Cette ségrégation conduit à deux produits, d'une part, à de l'oxyde de titane, d'autre part, à un condensat à faible teneur en atomes de titane intégré au réseau.

On pourrait imaginer de contrôler la vitesse d'hydrolyse du composé métallique en modifiant chimiquement sa structure, en utilisant par exemple de l'acide acétique ainsi que l'ont montré DOEUFF, HENRY, SANCHEZ et LIVAGE (J. non Cryst. Solids, 89, 1987, 84) dans le cas du titane. Toutefois, il s'agit là d'une opération lourde, onéreuse et exigeant du temps et des connaissances particulières,

On constate que les ORMOSILS ou ORMOCERS connus jusqu'à présents présentent une résistance chimique insuffisante aux acides et aux bases, et une température de décomposition trop basse, pour bon nombre d'applications.

La présente invention a pour but de proposer des produits de la famille précédente, munis de propriétés chimiques et thermiques améliorées.

La présente invention a également pour but de décrire un procédé de synthèse des produits précédents parmi les différents possibles.

La présente invention a pour objet un polycondensat organo-minéral, caractérisé par le fait qu'il répond à la formule

$$C_v H_w O_x Si_y Me_z$$

avec :

v = 4 à 48
w = 5 à 52
x = 5 à 48
y = 2 à 16

z = 1

le rapport $\dfrac{v}{y + z}$ étant inférieur à 7, $C_v H_w$ étant une chaîne carbonée portée par le silicium, Me étant un métal ou un mélange de métaux choisis dans les groupes IVA, VA, VIA, IIIB, IVB, de la classification périodique.

De préférence ledit rapport $\dfrac{v}{y + z}$ est inférieur à 5.

Selon des modes de réalisation préférentiels Me est choisi parmi Ti, Zr, Hf, Ta, W, Al, Si.

Les produits qui viennent d'être ainsi définis se distinguent des polycondensats de l'art antérieur par une teneur élevée en atomes métalliques et en silicium.

Cette composition particulière permet d'obtenir des propriétés renforcées tant au niveau chimique que thermique ou mécanique (tel que le coefficient de diffusion) :

- La résistance chimique vis-à-vis des acides et des bases et des solvants est fortement améliorée par l'augmentation de la teneur en éléments métalliques. De plus, à concentration molaire identique, plus l'atome métallique est de numéro atomique élevé, meilleure est la résistance à la corrosion.
- La résistance thermique, c'est-à-dire la température de décomposition, est d'autant plus élevée que la teneur en atomes métalliques est importante.
- Le coefficient de dilatation thermique dépend lui aussi de la teneur en atomes métalliques. Le contrôle de cette concentration permet d'adaptation de l'ORMOCER selon l'invention à des produits tels que des céramiques à base de zircone.

La présente invention a également pour objet un procédé de fabrication d'un polycondensat organo-minéral tel que précédemment défini et caractérisé par le fait que l'on réalise dans une première étape un précurseur liquide possédant une fonction organique polymérisable portée par la chaîne carbonée du silicium et que, dans une seconde étape, on réticule ledit précurseur par élévation de température et/ou par irradiation ultraviolette,

ladite première étape consistant à faire réagir :

. au moins un dérivé métallique de formule $MeR_x$ où :

- R représente soit un groupement hydrolysable, tel que atome d'halogène, alcoxy, acyloxy, acétyl acétonate, alcoxy, soit un groupement hydroxy,
- X représente la valence de l'élément métallique,

. avec au moins un silane fonctionnalisé de formule $R'_n Si(R''Y) (4-n)$ où :

- R' représente au moins un groupe organique hydrolysable de type alcoxy, aryloxy, un atome d'halogène ou une groupe hydroxy,

- R"Y représente une chaîne organique non hydrolysable et fonctionnalisée, dans laquelle R" représente une chaîne carbonée, saturée, insaturée, cyclique ou aromatique, comprenant éventuellement des hétéroatomes tels que l'oxygène, et Y représente un reste réactif dans les conditions de réaction, tel que groupement époxy ou une insaturation, un groupe vynil ou allyl,
- n est inférieur à 4.

Selon un mode de réalisation préférentiel, dans ladite première étape, on effectue d'abord une préhydrolyse partielle dudit silane fonctionnalisé par addition d'eau, en milieu acide ou basique, éventuellement en milieu organique, ladite quantité d'eau ajoutée étant inférieure à la quantité stoechiométrique.

De préférence on ajoute l'acide nécessaire sous forme d'une solution alcoolique.

La pré-hydrolyse partielle du silane fonctionnalisé libère partiellement les sites de condensation sur le silicium pour le composé métallique; lorsque ce dernier est ajouté, il se condense sur les positions hydrolysées du silane fonctionnalisé. Il est ainsi possible d'ajouter de fortes teneurs en dérivé métallique sans que celui-ci ne précipite, formant des particules d'oxyde métallique au sein du réseau organo-silicium, ce phénomène étant fortement préjudiciable à l'ensemble des propriétés de l'ORMOCER.

La réaction de condensation est poursuivie par une étape de reflux qui permet de finir la polycondensation moléculaire.

On procède ensuite à une distillation ou une évaporation pour éliminer les solvants organiques éventuels, l'eau, l'alcool, les acides ou les bases....

On obtient à ce stade un précurseur ORMOCER stable, liquide, pouvant être stocké, et qui constitue un produit intermédiaire selon l'invention.

Dans la deuxième étape, on réalise la polymérisation de ce précurseur ORMOCER. Cette polymérisation peut s'effectuer soit par élévation de température (polymérisation thermique), soit par irradiation ultraviolette.

Le cycle thermique utilisé pour la polymérisation se caractérise par trois points particuliers:

a) une montée en température relativement lente (30°C/h au maximum),

b) un long palier à une température comprise entre 60 et 100°C,

c) un palier de réticulation entre 110 et 160°C, et cela afin d'obtenir la polymérisation la plus homogène possible.

L'irradiation ultraviolette est avantageusement réalisée à la longueur d'onde de 245 nm.

Il est éventuellement possible de réaliser la polymérisation en combinant l'irradiation ultraviolette et la montée en température.

Dans une variante du procédé selon l'invention, on soumet l'ORMOCER à un rayonnement ionisant, et par exemple un rayonnement gamma ou électronique. Ce rayonnement provoque la formation de centres réactionnels, qui sont à l'origine de la formation, entre les différentes chaînes ORMOCERS, de liaisons supplémentaires par rapport à celles formées lors de la réticulation. Ce taux supérieur de liaisons entraîne une amélioration des propriétés physico-chimiques du produit, en particulier du coefficient de dilatation et de la résistance chimique. Un effet identique est obtenu avec des ultrasons de forte puissance.

La présente invention a également pour objet des applications nombreuses des polycondensats précédemment définis, notamment au collage de deux pièces, à la réalisation de structures composites, à l'imprégnation de pièces poreuses, à la réalisation de revêtements anti-abrasifs ou anti-corrosions chimiques; la mise en oeuvre du polycondensat est le plus souvent effectuée lorsqu'il se trouve à l'état de précurseur liquide, la réticulation étant effectuée ultérieurement.

Une première application consiste à coller des matériaux et, en particulier, des matériaux céramiques. Le précurseur liquide de l'ORMOCER est déposé sur les surfaces devant être collées, qui sont ensuite mises en contact. La réticulation est réalisée thermiquement. Après refroidissement, on obtient une pièce unique; ce collage permet un usinage de la pièce obtenue. Il est possible par cette technique d'obtenir des liaisons entre matériaux différents en adaptant les propriétés de l'ORMOCER, de manière à obtenir des produits sandwichs.

Une deuxième application consiste à obtenir des produits de forme complexe. Le précurseur liquide peut être coulé dans un moule présentant une géométrie complexe. La réticulation est réalisée par irradiation ultraviolette ou par élévation de température, et donne une pièce massive ayant parfaitement gardée la forme du moule. Par rapport au coulage de barbotine, cette technique évite l'étape toujours critique du séchage de la pièce. Par rapport aux matières plastiques, l'utilisation des ORMOCERS conduit à des produits présentant des propriétés physico-chimiques d'un niveau supérieur.

Une troisième application consiste à obtenir des structures composites qui sont soit des composites infiltrés, soit des composites sandwichs.

Dans le cas de composites infiltrés, on fait pénétrer le précurseur liquide de l'ORMOCER dans un réseau poreux en céramique, en métal fritté ou en verre fritté par exemple. La réticulation est réalisée soit thermiquement, soit par irradiation à l'intérieur du réseau poreux.

Dans le cas de composites sandwichs, on réalise des structures multicouches en utilisant des ORMOCERS de compositions différentes. Pour cela, on forme des films de précurseur liquide en utilisant par exemple la technique de coulage en bande. La bande formée subit une réticulation partielle (par exemple en étant chauffée à la température du palier intermédiaire du cycle de réticulation, soit à une température comprise entre 60°C et 100°C). Les bandes partiellement réticulées des différents ORMOCERS sont alors soit assemblées entre elles et subissent une cuisson de réticulation, soit servent de support de dépose à une couche d'un précurseur différent, la cuisson de réticulation étant faite après la dépose de la dernière couche.

Une quatrième application consiste à étancher une membrane poreuse pour éviter les fuites de produit en extrémité de membrane. Ces fuites sont préjudiciales à la performance de séparation de la membrane. Ce résultat est obtenu suivant des procédés similaires à ceux utilisés pour obtenir des composites d'infiltration.

Une cinquième application consiste à obtenir des revêtements anti-abrasifs ou anti-corrosions chimiques. Pour cela, on dépose un film du précurseur liquide à la surface des objets à protéger, soit par trempé, soit par peinture ou encore par projection à l'aide de pistolet. Le revêtement est alors réticulé soit thermiquement, soit par irradiation ultraviolette.

Ces applications sont données à titre purement indicatif et ne constituent pas elles-mêmes une limitation. De même, les exemples ci-dessous illustrent, à titre indicatif, quelques formulations d'ORMOCERS ainsi que quelques applications.

## EXEMPLE 1

On prépare un ORMOCER par préhydrolyse du (3,4 époxy cyclohexyl) éthyl triméthoxy silane (120 millimoles) par une solution aqueuse d'acide chlorhydrique (0,009 millimole) pendant une nuit. On ajoute ensuite 30 millimoles d'isopropoxyde de zirconium et 0,208 millimole d'acide chlorhydrique en solution aqueuse; la condensation est achevée par une étape de reflux (70°C) pendant 30 mn. On obtient, après élimination des solvants par évaporation sous vide et refroidissement, un liquide visqueux (120 mPas) : le précurseur liquide. On procède alors à la cuisson de réticulation (150°C pendant deux heures), la montée en température se faisant à la vitesse de 30°C/h, et le cycle comporte un palier de 16 h à 65°C.

L'analyse chimique donne comme composition pour l'ORMOCER la formule suivante

$$C_{32}H_{52}O_{16}Si_4Zr_1$$

soit un rapport C / (Si + Zr) = 6,4

La température de décomposition de ce produit est de 220°C. La résistance à la corrosion chimique du produit final a été testée en milieu acide (acide nitrique molaire: 24 heures à la température ambiante) et en milieu basique (soude molaire : 24 heures à la température ambiante) sans que l'on observe de dégradation des pièces.

On utilise ce produit pour obtenir un cylindre dont la surface extérieure présente trois bandes en surépaisseur. Dans ce but, on coule le précurseur liquide, obtenu comme intermédiaire lors de la synthèse de l'ORMOCER, dans un moule. On réalise alors la cuisson de réticulation dans les conditions définies ci-dessus. Après cuisson et démoulage, on obtient une pièce directement utilisable.

## EXEMPLE 2

On prépare un ORMOCER en préhydrolysant du trichlorovinyl silane (45 millimoles) et 0,05 millimole d'acide chlorhydrique en solution aqueuse, et 50 ml de solution équimolaire eau-méthanol comme solvant. La réaction a lieu à l'abri de l'air à la température ambiante pendant 15 heures. On ajoute alors 4 millimoles d'hydroxyde de titane. Après élimination des solvants, on obtient un liquide visqueux (viscosité 98 mPas), précurseur de l'ORMOCER. On réalise sa réticulation par cuisson. Après un premier palier de 10 h à 50°C, la température augmente à la vitesse de 10°C/h jusqu'à 140°C, température à laquelle un palier de 6 h est réalisé.

L'analyse chimique donne pour l'ORMOCER la formule suivante:

$$C_{23}HO_5Si_{11}Ti_1$$

soit un rapport C / (Si + Ti) = 1,92

Une analyse thermique donne une température de décomposition de 290°C, et une mesure de dilatation donne un coefficient $\alpha$ de 8 x $10^{-6}$ $K^{-1}$.

On désire étancher une membrane de filtration multicanal en céramique poreuse (porosité 33%, diamètre de 12 $\mu$m). Pour cela, on imprègne chacune des deux extrémités de l'élément filtrant en les plongeant dans le précurseur liquide de l'ORMOCER agité par ultrasons (60 KHz). Le précurseur pénètre la porosité de l'extrémité du bloc et s'étend sur une longueur de 12 mm. Après égouttage du précurseur, on procède à sa réticulation en utilisant le cycle thermique décrit ci-dessus.

L'observation en microscopie électronique à balayage permet de vérifier le remplissage complet de la porosité de l'extrémité de l'élément filtrant.

Un test de corrosion est réalisé en condition acide ($HNO_3$ 10% massique, pH = 0, $\theta$ = 80°C) et basique (NaOH 10% massique, pH > 14 et $\theta$ = 90°C) alternée. Aucune diminution de caractéristiques de remplissage n'est mise en évidence après 150 cycles de corrosion.

L'accord de dilatation entre la céramique et l'ORMOCER est testé par réalisation de chocs thermiques entre + 150°C (huile chaude) et - 20°C (saumure). Après 100 chocs thermiques, aucune dégradation des propriétés mécaniques n'est mise en évidence.

EXEMPLE 3

On utilise l'ORMOCER décrit dans l'exemple 2 pour réaliser un composite par infiltration.

Pour cela, on infiltre le précurseur liquide dans un tissu en fibre de verre. Le tissu est placé dans une enceinte étanche dans laquelle règne un vide partiel (10 mbars). On fait pénétrer le précurseur liquide dans cette enceinte, s'infiltrant par là-même dans le tissu de verre. Le tissu est ensuite retiré de l'enceinte, égoutté pour éliminer l'excédent de précurseur.

On procède à la réticulation du précurseur liquide par irradiation ultraviolette (longueur d'onde = 245 nm). L'irradiation est poursuivie pendant 6 heures à la température ambiante.

EXEMPLE 4

On prépare un ORMOCER en réalisant une pré-hydrolyse du triéthoxy vinyl silane (40 millimoles) par de l'eau (10 millimoles), en présence de 5 millimoles d'acide chlorhydrique en solution alcoolique. On ajoute ensuite 20 millimoles d'éthoxy tantale. Après 30 muinutes d'agitation, un complément de 30 millimoles d'eau est ajouté. La condensation est poursuivie à 70°C pendant 5 heures. On obtient, après élimination des produits de condensation et des solvants, un liquide de viscosité 53 mPas.

Sur ce précurseur liquide, on procède à une cuisson de réticulation à 125°C pendant 5 heures, la montée en température se faisant à la vitesse de 12°C/h, un palier de 3 h à 75°C ayant été respecté.

L'analyse chimique donne pour l'ORMOCER la composition suivante:
$$C_4H_6O_5Si_2Ta_1$$
soit un rapport $C / (Si + Ta) = 1,33$.

Les analyses thermiques permettent de mesurer une température de décomposition de 320°C et un coefficient de dilatation de $4 \times 10^{-6}$ $K^{-1}$.

On désire coller entre elles deux plaques carrées en alumine dense de 3 cm de côté. A cette fin, on dépose 0,5 g du précurseur liquide étalé à la surface de l'une de ces deux plaques. On recouvre ce dépôt à l'aide de la seconde plaque, puis on cuit l'ensemble suivant le cycle thermique défini ci-dessus.

Après cuisson, les deux plaques sont parfaitement collées. La résistance chimique de ce collage est testée en plongeant un ensemble collé dans différents milieux: acide phosphorique (2 molaire), potasse (1 molaire), diméthyl sulfoxide, acétone, sans qu'aucun de ces milieux n'induise une diminution de la cohésion de l'ensemble collé.

EXEMPLE 5

On prépare un ORMOCER en réalisant une pré-hydrolyse du propargyl triméthoxy silane (175 millimoles) avec 0,2 millimole d'acide chlorhydrique en solution alcoolique et 55 millimoles d'eau, sous agitation pendant 30 minutes. On ajoute alors 11 millimoles d'acétyl acétonate de tungstène, puis 5,3 millimoles d'acide chlorhydrique en solution éthanol et 35 millimoles d'eau. La condensation est poursuivie pendant 6 heures à 60°C. Après élimination des solvants et des produits d'élimination de la condensation, on obtient un liquide de viscosité 68 mPas.

Sur ce précurseur liquide, on réalise une cuisson de réticulation à 100°C pendant 10 heures, la montée en température se faisant à la vitesse de 8°C/mn (palier intermédiaire de 3 h à 55°C).

L'analyse chimique de l'ORMOCER donne la composition suivante:
$$C_{49}H_{49}O_{49}Si_{16}W_1$$
soit un rapport $C : (Si + W) = 2,82$.

Les analyses thermiques permettent de mesurer une température de début de décomposition de 230°C et un coefficient de dilatation de $22 \times 10^{-6}$ $K^{-1}$.

Des essais de corrosion ont été réalisés sur des lamelles du produit en milieu acide (acide sulfurique 30% massique), basique (soude 10% massique) et solvant (éthanol) sans dégrader le produit.

On désire réaliser avec ce produit un revêtement anti-abrasion et anti-corrosion. Pour cela, on dépose un film du précurseur liquide à l'intérieur d'un tube métallique. Ce dépôt peut être fait en bouchant l'extrémité inférieure du tube, en le remplissant avec le précurseur, puis, après une minute, en le vidangeant. On procède alors à la cuisson de réticulation comme indiqué ci-dessus.

On fait alors circuler à l'intérieur du tube une suspension de particules d'alumine à la vitesse de 2 m/s et en milieu acide nitrique (1 molaire) pendant 15 heures. Après arrêt de l'expérience, on ne constate pas de dégradation du revêtement.

EXEMPLE 6

On prépare un ORMOCER en réalisant une pré-hydrolyse du glycidoxypropyl triméthoxy silane (240 millimoles) par addition de 1 millimole d'acide chlorhydrique en solution éthanol et 50 millimoles d'eau, sous agitation pendant 30 minutes. On ajoute alors 30 millimoles de phénoxyde d'aluminium et 35 millimoles de tétra éthoxy d'hafnium, puis 15,4 millimoles d'acide chlorhydrique en solution éthanol et 75 millimoles d'eau. La condensation est poursuivie pendant 6 heures à 60°C. Après élimination des solvants et des produits d'élimination de la condensation, on obtient un liquide de viscosité 68 mPas. Ce précurseur liquide est réticulé par cuisson à 100°C pendant 10 heures, la montée en température se faisant à la vitesse de 8°C/mn (palier intermédiaire de 3 h à 75°C).

L'analyse chimique de l'ORMOCER donne comme composition :
$$C_{22}H_{41}O_{16}Si_4Al_{O,46}Hf_{0,54}$$

soit un rapport C : (Si + Al + Hf) de 4,4

Les analyses thermiques donnent une température de début de décomposition de 220°C et un coefficient de dilatation de 34 x 10⁻⁶ K⁻¹.

A partir du précurseur liquide, on réalise par la technique du coulage en bande une bande de 20 cm par 5 que l'on cuit à 75°C pendant 3 heures. Ces conditions correspondent aux conditions du palier intermédiaire du cycle de réticulation défini ci-dessus. Sur cette bande, et suivant la même technique, on dépose une bande du précurseur synthétisé dans l'exemple 5, et l'on cuit l'ensemble à 55°C pendant 3 heures.

On prépare par ailleurs une bande à partir du précurseur synthétisé dans l'exemple 2. Cette bande est cuite à 50°C pendant 10 heures. Cette nouvelle bande est déposée sur l'ensemble précédent, puis réticulée à 140°C pendant 6 heures (vitesse de montée 10°C/h).
On obtient in fine une structure de films empilés les uns sur les autres dénommée structure sandwich.

Bien entendu l'invention n'est pas limitée aux modes de réalisation qui viennent d'être décrits. On pourra, sans sortir du cadre de l'invention, remplacer tout moyen par un moyen équivalent.

## Revendications

1/ Polycondensat organo-minéral, caractérisé par le fait qu'il répond à la formule

$$C_vH_wO_xSi_yMe_z$$

avec :

$v = 4$ à $48$
$w = 5$ à $52$
$x = 5$ à $48$
$y = 2$ à $16$
$z = 1$

le rapport $\dfrac{v}{y + z}$ étant inférieur à 7,

$C_vH_w$ étant une chaîne carbonée portée par le silicium, Me étant un métal ou un mélange de métaux choisis dans les groupes IVA, VA, VIA, IIIB, IVB, de la classification périodique.

2/ Polycondensat selon la revendication 1, caractérisé par le fait que ledit rapport $\dfrac{v}{y + z}$ est inférieur à 5.

3/ Polycondensat selon l'une des revendications 1 et 2, caractérisé par le fait que Me est choisi parmi Ti, Zr, Hf, Ta, W, Al, Si.

4/ Procédé de fabrication d'un polycondensat organo-minéral selon l'une des revendications 1 à 3, caractérisé par le fait que l'on réalise dans une première étape un précurseur liquide possédant une fonction polymérisable portée par la chaîne carbonée du silicium et que, dans une seconde étape, on réticule ledit précurseur par élévation de température et/ou par irradiation ultraviolette,

ladite première étape consistant à faire réagir :

. au moins un dérivé métallique de formule MeRx où :
  - R représente soit un groupement hydrolysable, tel que atome d'halogène, alcoxy, acyloxy, acéthyl acétonate, alcoxy, soit un groupement hydroxy,
  - X représente la valence de l'élément métallique,

. avec au moins un silane fonctionnalisé de formule R'ₙ Si(R"Y) (4-n) où :
  - R' représente au moins un groupe organique hydrolysable de type alcoxy, aryloxy, un atome d'halogène ou une groupe hydroxy,
  - R"Y représente une chaîne organique non hydrolysable et fonctionnalisée, dans laquelle R" représente une chaine carbonée, saturée, insaturée, cyclique ou aromatique, comprenant éventuellement des hétéroatomes tels que oxygène, et Y représente un reste réactif dans les conditions de réaction, tel que groupement époxy ou une insaturation, un groupe vynil ou allyl,
  - n est inférieur à 4.

5/ Procédé de fabrication selon la revendication 4, caractérisé par le fait que dans ladite première étape,
  - on effectue d'abord une pré-hydrolyse partielle dudit silane fonctionnalisé par addition d'eau, en milieu acide ou basique, éventuellement en milieu organique, ladite quantité d'eau ajoutée étant inférieure à la quantité stoechiométrique,
  - on ajoute ensuite ledit dérivé métallique qui se condense,
  - on poursuit cette réaction de condensation par une étape de reflux qui permet de finir la polycondensation moléculaire,
  - on procède à une distillation ou à une évaporation.

6/ Procédé de fabrication selon l'une des revendications 4 et 5, caractérisé par le fait que le traitement thermique de réticulation dudit précurseur comporte successivement

a) une montée en température relativement lente (30°C/h au maximum),

b) un long palier à une température comprise entre 60 et 100°C,

c) un palier de réticulation entre 110 et 160°C.

7/ Procédé de fabrication selon l'une des revendication 4 et 5, caractérisé par le fait que l'irradiation ultraviolette pour la réticulation est réalisée à la longueur d'onde de 245 nanomètres.

8/ Procédé de fabrication selon l'une des revendications 4 à 7, caractérisé par le fait qu'il comporte une phase supplémentaire d'irradiation par rayonnement gamma, ou ultrasons.

**9/** Applications du polycondensat selon l'une des revendications 1 à 3, notamment au collage de deux pièces, à la réalisation de structures composites, à l'étanchage de pièces poreuses, à la réalisation de revêtements anti-abrasifs ou anti-corrosions chimiques, la mise en oeuvre du polycondensat étant effectuée lorsqu'il se trouve à l'état de précurseur liquide, la réticulation étant effectuée ultérieurement.

Office européen
des brevets

## RAPPORT DE RECHERCHE EUROPEENNE

Numero de la demande

EP     93 40 1853

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-3 403 050 (R.N. CHADHA)<br>* colonne 2 lignes 16-41; colonne 3 lignes 22-33 *<br>* revendications 1-3 *<br>--- | 1-4 | C07F7/08<br>C07F7/00<br>C04B41/84<br>C04B41/49<br>C07F9/00 |
| A | DE-A-2 023 976 (STAUFFER-WACKER SILICONE CORP.)<br>* revendication 1 *<br>--- | 1 | |
| A | DE-B-1 069 057 (UNION CARBIDE CORPORATION)<br>* revendications 1,3 *<br>--- | 1,4 | |
| A | EP-A-0 358 238 (KANSAI PAINT CO. LTD.)<br>* revendication 1 *<br>--- | 1 | |
| A | EP-A-0 319 384 (RHONE-POULENC CHIMIE)<br>* revendication 1 *<br><br>----- | 1 | |

### DOMAINES TECHNIQUES RECHERCHES (Int. Cl.5 )

C07F
C04B

Le présent rapport a été établi pour toutes les revendications

| Lieu de la recherche | Date d'achèvement de la recherche | Examinateur |
|---|---|---|
| BERLIN | 19 OCTOBRE 1993 | KAPTEYN H. |

EPO FORM 1503 03.82 (P0402)